(19) Europäisches Patentamt
European Patent Office
Office européen des brevets

(11) **EP 2 097 476 B1**

(12) **EUROPEAN PATENT SPECIFICATION**

(45) Date of publication and mention
of the grant of the patent:
**29.04.2020 Bulletin 2020/18**

(21) Application number: **08701233.2**

(22) Date of filing: **03.01.2008**

(51) Int Cl.:
*C08K 5/17* (2006.01)    *C09D 5/02* (2006.01)

(86) International application number:
**PCT/EP2008/050051**

(87) International publication number:
**WO 2008/081036 (10.07.2008 Gazette 2008/28)**

(54) **AMINE NEUTRALIZING AGENTS FOR LOW VOLATILE COMPOUND ORGANIC PAINTS**

AMIN-NEUTRALISIERUNGSMITTEL FÜR ORGANISCHE FARBEN AUS LEICHT FLÜCHTIGEN VERBINDUNGEN

AGENTS NEUTRALISANTS AMINES POUR PEINTURES ORGANIQUES À FAIBLE TENEUR EN COMPOSÉS VOLATILS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.01.2007 US 878835 P**

(43) Date of publication of application:
**09.09.2009 Bulletin 2009/37**

(73) Proprietor: **Taminco**
**9000 Gent (BE)**

(72) Inventors:
• **DOWLING, Conor, M.**
**Ambler, PA9002 (US)**
• **GERNON, Michael, D.**
**Phoenixville, PA 19460 (US)**
• **MARTYAK, Nicholas, M.**
**Doylestown, PA 18910 (US)**

(74) Representative: **Van Reet, Joseph et al**
**Gevers**
**Intellectual Property House**
**Holidaystraat 5**
**1831 Diegem (BE)**

(56) References cited:
**EP-A- 1 362 897        WO-A-99/32563**
**US-A1- 2006 106 129**

• **DATABASE CA [Online] CHEMICAL ABSTRACTS SERVICE, COLUMBUS, OHIO, US; 16 November 2003 (2003-11-16), BURGET, D. ET AL BURGET, D. ET AL: "Water-borne latex paints photocurable under visible light Water-borne latex paints photocurable under visible light" XP002475823 retrieved from STN Database accession no. 2003:893368 & TECHNICAL CONFERENCE PROCEEDINGS - RADTECH 2002: THE PREMIER UV/EB CONFERENCE & EXHIBITION, INDIANAPOLIS, IN, UNITED STATES, APR. 28-MAY 1, 2002 , 813-822 PUBLISHER: RADTECH INTERNATIONAL NORTH AMERICA, CHEVY CHASE, MD. CODEN: 69ETHJ TECHNICAL CONFER, 2002,**

**Description**

FIELD OF THE INVENTION

This invention relates to low volatile organic compound paints. More particularly, the invention relates to low volatile organic compound paints that contain N-alkyldialkanolamine neutralizing agents.

BACKGROUND OF THE INVENTION

Paints, coatings, sealants, adhesives and related products are typically produced as uncured and/or fluid mixtures which are sealed and stored for a period of time prior to use. A number of alkanolamines have been mentioned in published waterborne coating formulations. In particular, 2-amino-2-methyl-1-propanol, monoethanolamine, triethanolamine and many related alkanolamines have been employed. Neutralizing agents are present in many waterborne coatings, such as latex paint, in order to bring the pH up to an optimal value between 8 and 10, typically about 8.5 to 9.3. Ammonia and various low molecular weight aliphatic amines have been used in a number of latex paint formulations, but these materials impart an undesirable and unpleasant odor to the paint and in the case of amines contribute VOC to the overall formulation.

Although 2-Amino-2-methyl-1-propanol (AMP) has less odor than other materials that have been used, it still has some odor. In addition, AMP contributes to the amount of volatile organic compounds (VOC) in the paint formulation. Thus, a need exists for a latex paint formulation that has less odor and a lower VOC.

SUMMARY OF THE INVENTION

This invention is a use of particular N-alkyldialkanolamines as neutralizing agent in a latex paint formulation to reduce the volatile organic compound (VOC) content thereof as defined in claim 1. The latex paint formulation obtained by mixing different components which include at least one binder, at least one pigment, water and at least one neutralizing agent, said neutralizing agent being added in such an amount that the formulation has a pH of at least 8.5.

DETAILED DESCRIPTION OF THE INVENTION

Unless the context indicates otherwise, in the specification and claims, the terms pigment, binder, co-solvent, biocide, surfactant, additive, and similar terms also include mixtures of such materials. Unless otherwise specified, all percentages are percentages by weight.

Latex paint formulations are complex multi-component formulations that are used for the decorative and semi-functional finishing of residential and industrial surfaces. The formulation and manufacture of latex paint formulations is well known to those skilled in the art. Generally, latex paint formulations contain one or more pigments, one or more binders, a liquid carrier, and one or more additives. Additives include, for example, neutralizing agents, leveling agents and surfactants, rheology modifiers, co-solvents, corrosion inhibitors, and biocides.

Neutralizing agents are present in latex paint formulations to bring the pH up to an optimal value between 8 and 10, the pH is preferably raised to a value of at least 8.5, typically to a value of about 8.5 to 9.3. The neutralizing agent may be added to the paint formulation in at least three different places in the manufacturing process: to the pigment dispersion, to the resin dispersion, and/or in a final addition to the paint formulation.

Although ammonia and various low molecular weight aliphatic amines have been used in latex paint formulations, they impart an undesirable odor to the paint. 2-Amino-2-methyl-1-propanol (AMP) is commonly used as the neutralizing agent in high end paint formulations were low odor is required, but even with AMP some odor still remains. It has been found that N-alkyldiethanolamines and N-alkyldipropanolamines having alky groups of from 4 to 8 carbon atoms can be used as neutralizing agents in low VOC (*i.e.,* less than 60 grams per liter of VOC or preferably even less than 57 grams per liter of VOC, based on the total volume of the paint formulation, or less than 75, preferably less than 73 and more preferably even less than 70 grams per liter of VOC, based on the volume of the paint formulation from which the volume of water grams per liter of VOC, based on the total volume of the paint formulation, or less than 75, preferably less than 73 and more preferably even less than 70 grams per liter of VOC, based on the volume of the paint formulation from which the volume of water used to prepare the formulation has been detracted) waterborne coating formulations. A compound of particular value is N-butyldiethanolamine. An application of particular interest is water based latex paint. These N-alkyldialkanolamines are, by many regulatory definitions, not volatile organic compounds (VOC's). N-alkyldialkanolamines contribute almost no odor and generally have very low toxicity properties.

The N-alkyldialkanolamines of the present invention are of the general formulas

$$RN(CH_2CH_2OH)_2$$

or

$$RN(CH_2CH(OH)CH_3)_2$$

wherein R = alkyl or isoalkyl group with 4 to 8 carbon atoms have been found to be superior neutralizing agents for latex paints. Exemplary N-alkyldialkanolamines include n-butyldiethanolamine, n-pentyldiethanolamine, n-hexyldiethanolamine, n-heptyldiethanolamine, n-octyldiethanolamine, n-butyldipropanolamine, n-pentyldipropanolamine, n-hexyldipropanolamine, n-heptyldipropanolamine and n-octyldipropanolamine. Such N-alkyldialkanolamines have low odor, excellent assistance to pigment dispersion, excellent assistance to water resistance, excellent corrosion inhibition, excellent leveling characteristics and emulsification properties. Latex paints containing such N-alkyldialkanolamine neutralizing agents tested lower in volatile organic compounds (VOC) than those that contained currently commercialized neutralizing agents like AMP, monoethanolamine and methylaminoethanol. Such N-alkyldialkanolamines can favorably increase the open time of paint formulations allowing for the use of less cosolvent and coalescent solvent. Because co-solvents are volatile organic compounds, the amount of volatile organic compounds in the paint formulation can be reduced, not only by replacing a volatile neutralizing agent such as AMP by the N-alkyldialkanolamine, but also by reducing the amount of the cosolvent and/or the amount of the coalescent solvent used in the paint formulation.

The use of N-alkylethanolamines and N,N-dialkylethanolamines in latex paint formulations has already been disclosed in EP 1 362 897. These amines were not only used as neutralizing agent but also to provide synergetic effects in combination with a biocide. The claims also provide the possibility to use N-alkyldiethanolamines but no examples or experimental evidence is provided that these amines are actually suitable for being used as neutralizing agent in latex paints. Moreover, EP 1 362 897 does not disclose low VOC paint formulations which have a VOC content lower than 75 g/l based on the volume of the paint from which the water volume has been detracted. It does mention that the synergetic alkanolamine may be volatile, such as N-isopropylethanolamine, or non-volatile such as didodecylaminoethanol. However, it has now been found that it is not required to make an alkanolamine with a high molecular weight such as didodecylaminoethanol to render it non-volatile but that by simply using a di- instead of a monoethanolamine it no longer contributes to the VOC content of the paint formulation while still allowing to achieve the desired paint properties.

N-alkyldialkanolamines provide superior pigment dispersion. This is an advantage for flat paint formulations that have higher PVC's, typically 10% to 70%.

Pigments provide the color and hiding value of the paint. In addition, some pigments are added to impart bulk to the paint at relatively low cost. Pigments are finely ground particles or powders that are dispersed in the paint formulation. Pigments are insoluble in the carrier. There are two primary categories of pigments, prime pigments and extender pigments. Prime pigments provide color and are the main source of hiding capability. Titanium dioxide is the predominant white pigment. It provides whiteness by scattering the incident light and by hiding the surface to which the paint is applied. Color pigments provide color by selective absorption of the incident light. Organic pigments include, for example, copper phthalocyanines such as phthalocyanine blue and phthalocyanine green, quinacridone pigments, and Hansa yellow. Inorganic pigments include, for example, carbon black, iron oxide, cobalt blue, brown oxide, ochres, and umbers. The prime pigments are typically used with an extender pigment or pigments. Commonly used extender pigments include clays such as kaolin and china clay; silica, diatomaceous silica, and talc (magnesium silicate); calcium carbonate, such as chalk powder or marble powder; and zinc oxide.

The binder provides the durable and flexible matrix within which the pigments are dispersed and suspended. It binds the pigment particles together and provides integrity and adhesion for the paint film. The binders for latex paints are typically produced by free radical initiated aqueous emulsion polymerization of a monomer mixture containing alkyl acrylate (methyl acrylate, ethyl acrylate, butyl acrylate and/or 2-ethylhexylacrylate), alkyl methacrylate, vinyl alcohol/acetate, styrene, and, to a lesser extent, acrylonitrile and ethylene type monomers. The 100% acrylic resins exhibit better performance, but are generally more expensive. The pure vinyl (polyvinyl alcohol/acetate) resins are cheaper but have poor water resistance. Mixed vinyl-acrylic resins and 100% acrylic resins are most commonly used in North America. Styrene-acrylic resins are commonly used in Europe and in industrial maintenance type paints. The binder is typically dispersed in water as a polymer latex.

Pigment Volume Concentration (PVC) indicates the relative proportion of pigment to binder in the paint formulation. It is a comparison of the volume of the pigment or pigments to the total volume of the binder or binders and the pigment or pigments. To calculate the volume of each ingredient, it is necessary to divide the amount present in the formulation by its density. Pigment Volume Concentration is calculated as follows:

$$\%PVC = [\text{Volume of Pigments}/(\text{Volume of Pigments} + \text{Volume of binder})] \times 100$$

Pigment typically reduces the shininess or gloss of the binder, so, in general, the paint becomes less glossy as PVC increases. Typical PVC values associated with different levels of paint gloss are: gloss, 15% PVC; semigloss, 25% PVC; satin, 35% PVC, eggshell, 35-45% PVC; and flat, 38-80% PVC. Higher quality flat paints, both interior and exterior, generally have PVC's of about 38% to 50%.

The ingredients of the latex paint formulation are dissolved, suspended and/or dispersed in a carrier. Water is the only carrier of importance in latex paints. After all the others ingredients of the latex paint formulation have been accounted for, water makes up the balance of the formulation. Deionized water may be used.

Additives are additional ingredients that are added in small amounts to provide specific properties to the paint formulation and/or the paint film, such as mildew resistance, defoaming, light stability, and/or good flow and leveling during application. In addition to the neutralizing agent, discussed above, other additives that may be present in the paint formulation include some or all of the following types of materials. applied to a substrate. Open time allows for rebrushing or "melting in" of the newly applied coating at the lap, without causing brush marks, loss of gloss, or lap lines in the final dried coating. A lap is an area on a substrate where additional coating is applied onto a portion of a previously coated, but still wet, adjacent substrate area. Typically the amount of co-solvent may be 10 to 20 percent or more based on total liquid content of the paint formulation. Typical co-solvents are short chain water-soluble alcohols and glycols, such as ethylene glycol, diethylene glycol, propylene glycol, and glycerin. However, these co-solvents negate some of the advantages of aqueous coatings such as low tack, low odor, and low pollution. Because co-solvents are generally volatile organic compounds, only the minimum amounts necessary are used. An advantage of the N-alkyldialkanolamine used as neutralizing agent in the use according to the present invention is that its presence in the formulation increases the open time so that it lowers the minimum amount of co-solvent require to achieve the desired open time.

Leveling agents are added to change the surface tension and improve wetting. Leveling agents are a subset of surfactants used to insure that a paint formulation flows out over and completely wets the surface being painted. Reduced contact angles between the paint formulation and the surface lead to better flow leveling, and better surface wetting allows for better adhesion of the wet paint formulation and the dried paint film. Surfactants are also important as grinding aids for pigment grinding operations.

Rheology modifiers are added to thicken the paint formulation and to increase its yield stress, thus allowing for the formation of a stable suspension of pigments in resin upon mixing. Rheology modifiers are also added to optimize the application properties of the paint. Pigment dispersants are added to create a stable dispersion of the pigment. Pigment dispersants function by directly interacting with pigment particles both mechanically and electrostatically. Rheology modifiers function by increasing the yield stress of the water-resin system.

Corrosion inhibitors and flash rust inhibitors, while not essential, are added to a number of latex paints to suppress the migration of colored corrosion products from the surface of painted metal objects (*e.g.*, exposed nail heads in drywall) to the surface of the paint. Also, some paint formulators add rust inhibitors to prevent corrosion of iron alloy paint cans during paint storage.

Biocides and mildewcides are added to control microbial growth in the paint formulation and/or in the paint film. Microbes can colonize latex paints leading to filamentous growths, bad odors and the selective consumption of functional paint ingredients. Some biocides are added solely to control microbes during storage of the paint formulation (so called in-can biocides) while other biocides are added to impart biostability to the dried/cured paint film (so called dry film biocides). Some biocides can prevent both in-can and dry film biological growth. Typical biocides include isothiazolinones, such as 5-chloro-2-methyl-4-isothizolin-3-one; benzoisothiazolinones; triazines, such as hexahydro-1,3,5-*tris*-2-hydroxyethyl-*s*-triazine; 1-(3-chloroallyl)-3,5,7-triaza-1-azoniaadamantane chloride (DOWICIL® 75); zinc pyrithione; gluteraldehyde; bronopol; and phenolics.

Defoamers are special types of surfactants that have the effect of decreasing the foaminess of an agitated paint formulation, when it is manufactured, when it is shaken or stirred, and when it is applied to a surface. Defoamers are commercially available under a number of tradenames such as, for example, FOAMASTER®, ADVANTAGE® 1512, and BYK® 1650.

The evaporation of water and other volatile materials from a wet latex paint film begins the coalescing process by which the particles of binder coalesce into a continuous phase or film. However, the coalescence of many latex binders will not occur properly unless a small amount of more slowly evaporating solvent is present. 2,2,4-Trimethyl-1,3-pentanediol monoisobutyrate, (TEXANOL® ester alcohol) and 2-ethylhexyl benzoate (VELATE® 378) are commonly used coalescing agents. An advantage of the N-alkyldialkanolamine used as neutralizing agent in the use according to the present invention is that its presence in the formulation has a positive effect on the coalescence process to that less coalescent solvent is required in the formulation.

In addition to the additives listed above, the paint formulation may also comprise other additives such as, for example, light stabilizers, heat stabilizers (particularly for baked coatings), cross-linking agents (mostly used with specialty resins containing cross-linkable groups), curing catalysts, mar/slip aids, and flatting agents.

In addition to the additives listed above, the paint formulation may also comprise other additives such as, for example, light stabilizers, heat stabilizers (particularly for baked coatings), cross-linking agents (mostly used with specialty resins containing cross-linkable groups), curing catalysts, mar/slip aids, and flatting agents.

The manufacture of paint formulations is well known to those skilled in the art. In the first phase, known as the grind phase, the dry pigments are dispersed into part of the carrier. The pigment dispersant and some of the other additives are also added during the grind phase. Once the pigment is dispersed, in the second phase, known as the letdown phase, the remaining ingredients, including the binder are added. The physical properties, such as viscosity and pH are checked. There may be a final addition of carrier and/or other ingredients to adjust the properties of the paint formulation. The paint formulation is then packaged and sent to consumers.

Industrial Applicability

The paint formulations of the invention are useful as latex paints, typically as flat latex paints that can be used in interior and exterior applications. They can be applied to a wide variety of substrates such as, for example, paper, wood, concrete, metal, glass, ceramics, plastics, plaster, and roofing substrates such as asphaltic coatings, roofing felts, foamed polyurethane insulation; or to previously painted, primed, undercoated, worn, or weathered substrates using a variety of techniques well known in the art such as, for example, brush, rollers, mops, air-assisted or airless spray, and electrostatic spray.

The advantageous properties of this invention can be observed by reference to the following examples, which illustrate but do not limit the invention.

EXAMPLES

Example 1: Vapor Pressure:

The N-alkyldialkanolamine neutralizing agents of the present invention are, by many regulatory definitions, not volatile organic compounds. One definition of a VOC requires it to have a vapor pressure of 0.1 mmHg or higher at room temperature (RT) along with a boiling point at 760 mm Hg of 250 °C or less.

The vapor pressure of N-alkyldialkanolamines as a function of temperature can be calculated with a Clausius-Clapeyron type correlation. Two-parameter log vapor pressure versus inverse temperature correlations (log P versus 1/T) were calculated, based on existing literature data, three alkanolamines. For monoethanolamine, a vapor pressure equation of the Antoine type could be found in the literature. The correlation equations are followed by a tabular listing of the calculated vapor pressure versus temperature data. The first two alkanolamines examined (MEA & AMP) are commonly used neutralizing agents for waterborne coatings and paints. The third and fourth alkanolamines are N-alkyldialkanolamines in accordance with the present invention. The calculations show that the N-alkyldialkanolamines of the present invention are not VOC's while many alkanolamines currently in use are VOC's.

Monoethanolamine, (MEA) (GMW = 61.08, CAS RN 141-43-5):

The following literature equation was used:

$$\log P \text{ (kPa)} = 7.38081 - 2081.50/(T-55.79).$$

Tochigi, Katsumi; Akimoto, Kentarou; Ochi, Kenji; Liu, Fangyhi; Kawase, Yasuhito; J.Chem.Eng.Data, 1999, 44(3), 588 - 590.

2-Amino-2-methyl-1-propanol, (AMP), (GMW = 89.14, CAS RN 124-68-5):

| BP (°C) | BP (°K) | P (torr) | P (kPa) | Reference |
|---|---|---|---|---|
| 164 | 437.15 | 760 | 101.323 | Jedlinski, Z.; Paprotny, J.; Rocz.Chem., 1966, 40, 1487-1493. |
| 102 | 375.15 | 64 | 8.532 | Johnson; Degering; J.Org.Chem., 1943, 8, 11. |
| 88 | 361.15 | 39 | 5.199 | Naesaenen; Lindell; Finn. Chem. Lett., 1975, 38. |
| 75 | 348.15 | 16 | 2.133 | Di Giorgio; Sommer; Whitmore; J.Amer.Chem.Soc., 1949, 71, 3255. |
| 68 | 341.15 | 10 | 1.333 | Adkins; Billica; J.Amer.Chem.Soc., 1948, 70, 3121. |

(continued)

| BP (°C) | BP (°K) | P (torr) | P (kPa) | Reference |
|---|---|---|---|---|
| 56 | 329.15 | 6 | 0.800 | Mathis et al., Bull. Soc. Chim. Fr., 1970, 3047 - 3055. |

$$Log(P) = \frac{-2846}{T} + 9.3992$$

In this equation, and in the following equations for BDEA and ODEA, P is expressed in Torr (mm Hg) and T in °C.

N-butyldiethanolamine, (BDEA) (GMW = 161.3, CAS RN 102-79-4):

Below is a Table of literature data for the boiling point of BDEA versus pressure.

| BP (°C) | BP (°K) | P (Torr) | P(kPa) | Reference |
|---|---|---|---|---|
| 274 | 547.15 | 741 | 98.790 | Matthes; Justus Liebigs Ann. Chem., 1901, 315, 128. |
| 214 | 487.15 | 150 | 19.998 | Matthes; Justus Liebigs Ann. Chem., 1901, 315, 128. |
| 153 | 426.15 | 16 | 2.133 | Ishiguro et al.; Yakugaku Zasshi, 74; 1954, 1162-1164; Chem.Abstr.; 1955; 14767. |
| 148 | 421.15 | 15 | 1.999 | Fujiki; Collect. Scient. Pap. 5th Anniv. Shizuoka Coll. Pharm., 1958, 147; Chem.Abstr.; 1959; 3050. |
| 122 | 395.15 | 3 | 0.400 | Shimanskii et al.; Sb. Tr. Ukr. Nauchn., 1960, 6, 99; Chem.Abstr.; 58; 1963. |
| 117 | 390.15 | 2 | 0.267 | Yang, Qinzheng; Lin, Jimao; Li, Fangzheng; Synth.Commun., 2001, 2817 - 2822. |
| 106 | 379.15 | 0.6 | 0.080 | Szarvasi,E. et al.; Eur. J. Med. Chem. Chim. Ther., 11, 1976, 115-124. |

$$Log(P) = \frac{-3652}{T} + 9.660638$$

N-octyldiethanolamine, (ODEA) (GMW = 217.35, CAS RN 15520-05-5):

| BP (°C) | BP (°K) | P (torr) | P (kPa) | Reference |
|---|---|---|---|---|
| 175 | 448.15 | 4 | 0.5333 | Bush; US Patent 2541088, 1946. |
| 155 | 428.15 | 0.75 | 0.1000 | Laboratory data |
| 144 | 417.15 | 0.3 | 0.0400 | Zuniga, H.; Bartulin, J.; Ramirez, A.; Muller, H.; Taylor, T. R.; Mol. Cryst. Liq. Cryst., 1990, 185, 131-140. |
| 130 | 403.15 | 0.075 | 0.0100 | Laboratory data |

$$Log(P) = \frac{-6903}{T} + 16.00739$$

Vapor Pressure & BP Tabular Summary

| Temperature (°C) | MEA (Torr) | AMP (Torr) | BDEA (Torr) | ODEA (Torr) |
|---|---|---|---|---|
| 20 | 0.306584 | 0.490699 | 0.001595 | 2.88E-08 |
| 30 | 0.693535 | 1.025804 | 0.00411 | 1.72E-07 |
| 40 | 1.472437 | 2.045783 | 0.009965 | 9.2E-07 |
| 50 | 2.954923 | 3.909313 | 0.022876 | 4.42E-06 |
| 60 | 5.63952 | 7.185509 | 0.049958 | 1.94E-05 |
| 70 | 10.28968 | 12.74697 | 0.104247 | 7.78E-05 |
| 80 | 18.03003 | 21.89059 | 0.208652 | 0.000289 |
| 90 | 30.46072 | 36.49001 | 0.401964 | 0.000997 |
| 100 | 49.78879 | 59.18291 | 0.747634 | 0.003222 |
| 110 | 78.97431 | 93.59566 | 1.346241 | 0.009794 |
| 120 | 121.8884 | 144.6068 | 2.352678 | 0.028132 |
| 130 | 183.4792 | 218.6497 | 3.999217 | 0.076689 |
| Boiling Points @ 760 mm Hg (calculation) | | | | |
| BP (°C) | | 162 | 270 | 255 |
| Boiling Points @ 760 mm Hg (literature) | | | | |
| BP (°C) | 170 | 164 | 274 @ 741 mm Hg | none available |
| MEA: Stone, P. G.; Cohen, S. G.; J. Amer. Chem. Soc. 1982, 104(12), 3435-3440. | | | | |
| AMP: Jedlinski, Z.; Paprotny, J.; Rocz.Chem., 1966, 40, 1487-1493. | | | | |
| BDEA: Matthes; Justus Liebigs Ann. Chem., 315, 1901, 128. | | | | |

As appears from this table, BDEA and ODEA have both a boiling point at 760 mm Hg higher than 250°C. Their vapor pressure at 20°C is moreover lower than 0.1 mm Hg, or even lower than 0.01 mm Hg, so that BDEA and ODEA are clearly no volatile organic compounds.

Example 2: Paint Properties

Twelve gloss paints were made up with four different alkanolamines and three different levels of titanium dioxide:

| | A1 | A2 | A3 | A4 | B1 | B2 | B3 | B4 | C1 | C2 | C3 | C4 |
|---|---|---|---|---|---|---|---|---|---|---|---|---|
| Water | 158.3 | 158.3 | 158.3 | 158.3 | 158.3 | 158.3 | 158.3 | 158.3 | 158.3 | 158.3 | 158.3 | 158.3 |
| Kathon, 1.5%[a] | 1.5 | 1.5 | 1.5 | 1.5 | 1.5 | 1.5 | 1.5 | 1.5 | 1.5 | 1.5 | 1.5 | 1.5 |
| Tamol 2001[a] | 2.5 | 2.5 | 2.5 | 2.5 | 2.5 | 2.5 | 2.5 | 2.5 | 2.5 | 2.5 | 2.5 | 2.5 |
| **BAE**[b] | **4.0** | | | | **4.0** | | | | **4.0** | | | |
| BDEA | | 4.0 | | | | 4.0 | | | | 4.0 | | |
| **AMP 95**[c] | | | 4.0 | | | | 4.0 | | | | 4.0 | |
| **NH$_3$, 28%** | | | | **4.0** | | | | **4.0** | | | | **4.0** |
| Triton CF-10[c] | 1.0 | 1.0 | 1.0 | 1.0 | 1.0 | 1.0 | 1.0 | 1.0 | 1.0 | 1.0 | 1.0 | 1.0 |
| BYK 022[d] | 1.0 | 1.0 | 1.0 | 1.0 | 1.0 | 1.0 | 1.0 | 1.0 | 1.0 | 1.0 | 1.0 | 1.0 |
| **R-706 (TiO$_2$)**[e] | **180.0** | **180.0** | **180.0** | **180.0** | **200.0** | **200.0** | **200.0** | **200.0** | **220.0** | **220.0** | **220.0** | **220.0** |
| Water | 10.0 | 10.0 | 10.0 | 10.0 | 5.0 | 5.0 | 5.0 | 5.0 | | | | |
| **Grind** | | | | | | | | | | | | |
| HG 706 Rhoplex[a] | 584.1 | 584.1 | 584.1 | 584.1 | 584.1 | 584.1 | 584.1 | 584.1 | 584.1 | 584.1 | 584.1 | 584.1 |
| Texanol[f] | 7.9 | 7.9 | 7.9 | 7.9 | 7.9 | 7.9 | 7.9 | 7.9 | 7.9 | 7.9 | 7.9 | 7.9 |
| RM 2020NPR Acrysol[a] | 30.0 | 30.0 | 30.0 | 30.0 | 30.0 | 30.0 | 30.0 | 30.0 | 30.0 | 30.0 | 30.0 | 30.0 |
| **Mix next 3** | | | | | | | | | | | | |
| Triton X-100[c] | 4.4 | 4.4 | 4.4 | 4.4 | 4.4 | 4.4 | 4.4 | 4.4 | 4.4 | 4.4 | 4.4 | 4.4 |
| Propylene Glycol | 6.0 | 6.0 | 6.0 | 6.0 | 6.0 | 6.0 | 6.0 | 6.0 | 6.0 | 6.0 | 6.0 | 6.0 |
| Water | 8.3 | 8.3 | 8.3 | 8.3 | 8.3 | 8.3 | 8.3 | 8.3 | 8.3 | 8.3 | 8.3 | 8.3 |
| SCT 275 Acrysol[a] | 3.5 | 3.5 | 3.5 | 3.5 | 3.5 | 3.5 | 3.5 | 3.5 | 3.5 | 3.5 | 3.5 | 3.5 |
| BYK 024[d] | 2.0 | 2.0 | 2.0 | 2.0 | 2.0 | 2.0 | 2.0 | 2.0 | 2.0 | 2.0 | 2.0 | 2.0 |

| | Mix next 3 | | | | | | | | | | | |
|---|---|---|---|---|---|---|---|---|---|---|---|---|
| TOTAL | 1004.5 | 1004.5 | 1004.5 | 1004.5 | 1019.5 | 1019.5 | 1019.5 | 1019.5 | 1034.5 | 1034.5 | 1034.5 | 1034.5 |

a : Rohm & Haas Corp. (Kathon biocide, Tamol dispersant, Acrysol thickeners, Rhoplex binder)
b: N-*n*-butylaminoethanol
c: Dow (AMP = 2-amino-2-methyl-1-propanol, Triton surfactants)
d: Byk Chemie (defoamers)
e: Dupont (titanium dioxide pigment)
f: Eastman Chemical (coalescing solvent)

The paints made up with BDEA displayed excellent properties as compared to those made up with ammonia, BAE and AMP-95® (trademark of Dow Corp.). The results are given in tabular form below:

| | 180 LBS TiO$_2$ | | | | 200 LBS TiO$_2$ | | | |
|---|---|---|---|---|---|---|---|---|
| | A1 | A2 | A3 | A4 | B1 | B2 | B3 | B4 |
| Amine | BAE | BDEA | AMP 95 | NH$_3$ | BAE | BDEA | AMP 95 | NH$_3$ |
| TiO$_2$ Level | 180.0 | 180.0 | 180.0 | 180.0 | 200.0 | 200.0 | 200.0 | 200.0 |
| pH | 9.35 | 9.15 | 9.47 | 9.08 | 9.20 | 9.01 | 9.51 | 8.95 |
| Viscosity, KU | 84 | 87 | 96 | 103 | 93 | 94 | 102 | 95 |
| Viscosity, ICI | 1.1 | 1.1 | 1.3 | 1.2 | 1.3 | 1.4 | 1.5 | 1.3 |
| Contrast Ratio 3 Mils | 0.952 | 0.951 | 0.954 | 0.950 | 0.960 | 0.957 | 0.963 | 0.962 |
| Reflectance | 93.5 | 93.5 | 93.5 | 93.5 | 93.9 | 93.8 | 94.0 | 93.8 |
| Gloss 20 Degrees | 53.9 | 53.1 | 56.2 | 43.9 | 54.9 | 46.7 | 54.4 | 51.5 |
| Gloss 60 Degrees | 79.6 | 80.0 | 79.6 | 79.1 | 79.4 | 79.3 | 79.3 | 78.8 |
| Color Acceptance | 10 | 10 | 10 | 10 | 10 | 10 | 10 | 10 |
| Color Float | 8 | 8 | 8 | 8 | 9 | 9 | 9 | 9 |
| Tint Strength | 41.2 | 41.5 | 41.8 | 41.1 | 42.8 | 42.3 | 43.4 | 42.3 |

| | 220 LBS TiO$_2$ | | | |
|---|---|---|---|---|
| | C1 | C2 | C3 | C4 |
| Amine | BAE | BDEA | AMP 95 | NH$_3$ |
| TiO$_2$ Level | 220.0 | 220.0 | 220.0 | 220.0 |
| pH | 9.14 | 9.00 | 9.35 | 8.87 |
| Viscosity, KU | 93 | 97 | 106 | 100 |
| Viscosity, ICI | 1.4 | 1.5 | 1.6 | 1.4 |
| Contrast Ratio 3 Mils | 0.967 | 0.964 | 0.966 | 0.967 |
| Reflectance | 94.1 | 94.0 | 94.3 | 94.2 |
| Gloss 20 Degrees | 53.2 | 54.7 | 52.8 | 42.1 |
| Gloss 60 Degrees | 79.4 | 80.1 | 78.8 | 76.8 |
| Color Acceptance | 10 | 10 | 10 | 10 |
| Color Float | 9 | 9 | 9 | 9 |
| Tint Strength | 44.0 | 43.6 | 44.2 | 43.8 |

Example 3 (Low Volatility in Alkyd Paint):

The volatility of the N-alkyldiethanolamine, octyldiethanolamine (ODEA) was compared to 2-amino-2-methyl-1-propanol (AMP-95). Solutions of methyl esters containing predominately methyl oleate, mehyl linoleate and methyl linolenate were used to mimic an alkyd resin. To each was added: 1) 1000 mg/dm$^3$ octyldiethanolamine or 2) 1000 mg/dm$^3$ 2-amino-2-methyl-1-1propanol. The solutions were heated to 110 °C and air was passed through them at a controlled rate. The air stream caused a portion of the methyl ester solution to degrade, and the role of the amine is to neutralize any volatile short-chain free fatty acids that form as a result of this oxidation. If the amine was too volatile and thus readily removed from the ester solution, then it will not effectively neutralize the short-chain free fatty acids formed. The experiment was run until a trap solution displayed an increase in conductivity from about zero to approximately 30 μSiemens. The conductivity will increase linearly as a function of time after an induction period is passed. The linear conductivity increase was extrapolated back to the x-axis in order to get an accurate measurement of the induction time. The fatty acid ester solution containing ODEA had an induction period of 5.36 hours while the same solution containing AMP had an induction period of only 0.68 hours showing that AMP is much more volatile than ODEA in alkyd paint type systems.

Example 4: better film formation

Paints formulated with BDEA exhibit superior film forming properties, as the following series of four paints made up with two different neutralizing alkanolamines demonstrates (ingredient amounts given in pounds per 100 gallons (US)).

| Ingredient | Paint 1 | Paint 2 | Paint 3 | Paint 4 |
|---|---|---|---|---|
| Pigment Slurry | | | | |
| Ti-Pure R-946 | 325.5 | 325.5 | 325.5 | 325.5 |
| Water | 86.8 | 86.8 | 86.8 | 86.8 |
| Propylene Glycol | 37.2 | 37.2 | 37.2 | 37.2 |
| BYK® 022 | 1.0 | 1.0 | 1.0 | 1.0 |
| Kathon® LX 1.5% | 1.8 | 1.8 | 1.8 | 1.8 |
| The Alkanolamine (only one alkanolamine used in a paint) | | | | |
| BDEA | 12.8 | 9.6 | 6.4 | 3.2 |
| BAE | | | | |
| AMP 95 | | | | |
| The Coalescing Solvent | | | | |
| Texanol | 0 | 3.2 | 6.4 | 9.6 |
| Total Coalescent = Alkanolamine + Texanol | | | | |
| % Alkanolamine (of total coalescent) | 100% | 75% | 50% | 20% |
| Mix & Disperse & Let Down | | | | |
| Rhoplex® SG 30 | 501.4 | 501.4 | 501.4 | 501.4 |
| Aersol® OT-75 | 1.5 | 1.5 | 1.5 | 1.5 |
| BYK® 022 | 1.0 | 1.0 | 1.0 | 1.0 |
| Acrysol® RM 7 | 16.0 | 16.0 | 16.0 | 16.0 |
| Water | 65.2 | 65.2 | 65.2 | 65.2 |
| Ti-Pure® R-946: Titanium dioxide slurry sold by Dupont (Wilmington, DE)<br>BYK® 022: Silicone defoamer sold by Byk (Wesel, Germany)<br>Kathon® LX: MIT/CMIT preservative sold by Rohm & Haas (Philadelphia, PA)<br>BDEA: butyldiethanolamine 6.2 milliequiv/g<br>AMP-95: Alkanolamine (10.7 mequiv/g) sold by Dow (Midland, MI)<br>Rhoplex® SG 30: All acrylic zero-VOC resin sold by Rohm & Haas (Philadelphia, PA)<br>Aersol® OT-75: Anionic surfactant sold by Cytec Industries (West Paterson, NJ)<br>Acrysol® RM 7: Thickener sold by Rohm & Haas (Philadelphia, PA) | | | | |

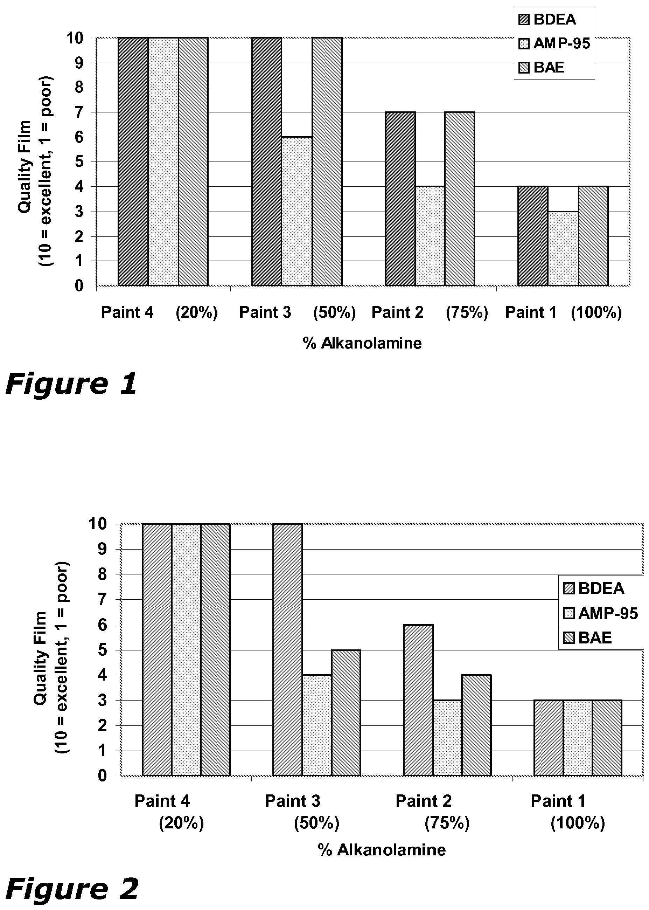

The above 12 paints were examined with respect to low temperature film formation on sealed and unsealed Leneta paper. The paint samples and drawdown equipment were placed in a refrigerator (40 °F) for two hours. The paints were applied by drawdown on a sealed/unsealed Leneta Form HK chart to a uniform thickness of 6 mils. The drawdowns were then allowed to dry in a horizontal position for 24 hours at 40°F. After drying, the drawdowns were examined and rated using the Lab Rating System. The results of the sealed film formation are shown in Figure 1 and the results of the unsealed film formation are shown in Figure 2.

These results demonstrate that upto 50% of the coalescent solvent can be omitted when using a corresponding amount of BDEA without affecting the film quality. The use of BDEA as neutralizing amine thus not only contributes to the VOC content of the paint formulation but enables moreover to reduce the amount of VOC coalescent solvent without affecting the film formation.

Example 5: reduction of the amount of coalescent solvent

The following four paint formulations were derived by reducing the amount of volatile coalescing solvent from a reference formula to the maximum extent made possible by the use of different alkylalkanolamines. The four comparative formulas are given below (ingredient amounts in pounds per 100 gallons (US)):

| | A | B | C | D |
|---|---|---|---|---|
| TiO$_2$ Slurry - R-746 | 325.5 | 325.5 | 325.5 | 325.5 |
| Water | 83.5 | 83.5 | 83.5 | 83.5 |
| Propylene Glycol | 37.2 | 37.2 | 37.2 | 37.2 |
| BYK 022 | 1.0 | 1.0 | 1.0 | 1.0 |
| BDEA | 5.6 | | | |
| Methylamino ethanol | | 1.9 | | |
| AMP-95 | | | 1.9 | |
| Ammonia | | | | 2.0 |
| Kathon LX 1.5% | 1.8 | 1.8 | 1.8 | 1.8 |
| | | | | |
| Mix | | | | |
| | | | | |
| Rhoplex SG 30 | 501.4 | 501.4 | 501.4 | 501.4 |
| Texanol | 10.0 | 11.0 | 12.0 | 14.5 |
| Aersol OT-75 | 1.5 | 1.5 | 1.5 | 1.5 |
| BYK 022 | 1.0 | 1.0 | 1.0 | 1.0 |
| Acrysol RM 7 | 16.0 | 16.0 | 16.0 | 16.0 |
| Water | 65.4 | 65.4 | 65.4 | 65.4 |
| TOTAL | 1049.9 | 1047.2 | 1048.2 | 1050.8 |

Ti-Pure® R-746: Titanium dioxide slurry sold by Dupont (Wilmington, DE)
BYK® 022: Silicone defoamer sold by Byk (Wesel, Germany)
Kathon® LX (1.5%): In-can preservative sold by Rohm & Haas (Philadelphia, PA)
BDEA: butyldiethanolamine 6.2 milliequiv/g sold by Taminco
Supersperse® 95: Alkanolamine (12.6 mequiv/g) sold by Eagle Mkt. (St. Louis, MO)
AMP-95: Alkanolamine (10.7 mequiv/g) sold by Dow (Midland, MI)
Ammonia (26%): Aqueous ammonia solution
Rhoplex® SG-30: All acrylic resin emulsion sold by Rohm & Haas (Philadelphia, PA)
Texanol: 2,2,4-trimethyl-1,3-pentanediol isobutyrate sold by Eastman (Kingsport, TN)
Aersol® OT-75: Anionic surfactant sold by Cytec Industries (West Paterson, NJ)
Acrysol® RM-7: Rheology modifier sold by Rohm & Haas (Philadelphia, PA)

Based on the total volume of the paint formulation, the necessary VOC levels of paints not based on BDEA were all above 60 grams per liter. The VOC level of the paint based on BDEA was below 60 grams per liter. When the volume of water used to prepare the paint formulation is detracted from the total volume thereof, the formulation which is based on BDEA has a VOC content of less than 70 g/l. This is an important parameter since it is not influenced by the variable amount of water which can be added to the paint formulation. The functional test results for these four paints are given below:

| Component | A | B | C | D |
|---|---|---|---|---|
| Amine | BDEA | Supersperse 95 | AMP 95 | Ammonia |
| Level | 5.6 | 1.9 | 1.9 | 2.0 |
| Coalescent Level | 10.0 | 11.0 | 12.0 | 14.5 |
| VOC (on total volume) | 56.6 g/l | 60.1 g/l | 61.3 g/l | 62.0 g/l |
| VOC (on volume without water) | 68.9 g/l | 73.2 g/l | 74.7 g/l | 75.5 g/l |
| pH | 8.9 | 8.9 | 8.9 | 8.9 |
| Viscosity, KU | 84 | 84 | 90 | 101 |
| Viscosity, ICI | 1.25 | 1.35 | 1.35 | 1.40 |
| | | | | |
| Contrast Ratio, 3 Mils | 0.972 | 0.972 | 0.973 | 0.978 |
| Reflectance | 94.9 | 95.1 | 95.1 | 95.1 |
| | | | | |
| L* | 96.25 | 96.33 | 96.28 | 96.37 |
| a* | -1.11 | -1.11 | -1.11 | -1.11 |
| b* | 1.63 | 1.59 | 1.53 | 1.50 |
| ASTM E313 (Yellowness Index) | 2.23 | 2.17 | 2.05 | 2.00 |
| | | | | |
| Gloss 20 Degrees | 44.4 | 43.6 | 46.5 | 44.2 |
| Gloss 60 Degrees | 75.6 | 74.5 | 77.0 | 77.2 |
| | | | | |
| Dry To Touch Time (Minutes) | 36 | 34 | 33 | 30 |
| | | | | |
| Color Acceptance | 9(1) | 9(1) | 9(1) | 10 |
| Color Float | 5 | 5 | 5 | 5 |
| | | | | |
| Low Temperature Film Formation | | | | |
| Sealed | 10 | 10 | 10 | 10 |
| Unsealed | 10 | 10 | 10 | 10 |
| | | | | |
| Mudcracking | Pass 60 | Pass 60 | Pass 60 | Pass 60 |
| | | | | |
| Block Resistance | | | | |
| 7 Days RT | 8 | 9 | 9 | 9 |
| 7 Days 120F | 3 | 6 | 5 | 7 |
| | | | | |
| Adhesion, Gloss Alkyd (7 Days) | | | | |
| Wet | 5B | 5B | 5B | 5B |
| Dry | 5B | 5B | 5B | 5B |

(continued)

| Component | A | B | C | D |
|---|---|---|---|---|
|  |  |  |  |  |
| Open Time |  |  |  |  |
| 1 Minute | 10 | 10 | 10 | 10 |
| 2 Minutes | 10 | 10 | 10 | 10 |
| 3 Minutes | 10 | 9 | 9 | 10 |
| 4 Minutes | 9 | 9 | 8 | 9 |
| 5 Minutes | 9 | 8 | 7 | 8 |
| 6 Minutes | 8 | 7 | 7 | 7 |
| Scrub Resistance (Cycles) | 1246 | 1186 | 1296 | 1488 |

The above results illustrate that the open time of the paint is longer when BDEA is used as neutralizing amine. Consequently, when a longer open time is not required, it appears to be possible to reduce the amount of co-solvent (propylene glycol) to further reduce the VOC content of the paint formulation.

Having described the invention, we now claim the following and their equivalents.

## Claims

1. Use of at least one N-alkyldialkanolamine of the formula

$$RN(CH_2CH_2OH)_2$$

or

$$RN(CH_2CH(OH)CH_3)_2$$

wherein R is an alkyl or isoalkyl group with 4 to 8 carbon atoms; which N-alkyldialkanolamine has a vapor pressure lower than 0.1 mm Hg, preferably lower than 0.01 mm Hg, at 20°C and a boiling point at 760 mm Hg higher than 250°C, as neutralizing agent in a latex paint formulation added in such an amount that the formulation has a pH of at least 8.5 to reduce the volatile organic compound (VOC) content thereof, the paint formulation being obtained by mixing different components which include at least one binder, at least one pigment, water and at least one neutralizing agent, wherein a VOC has a vapor pressure of 0.1 mmHg or higher at room temperature (RT) along with a boiling point at 760 mm Hg of 250 °C or less.

2. Use according to claim 1 wherein the paint formulation contains less than 60 g/l VOC based on the total volume of the paint.

3. Use according to claim 1 wherein the paint formulation contains less than 75 g/l VOC, preferably less than 73 g/l and more preferably less than 70 g/l, based on the volume of the paint formulation from which the water volume has been detracted.

4. Use according to any one of the claims 1 to wherein said components which are mixed to produce the paint formulation comprise a co-solvent which is a volatile organic compound to aid in film formation, to resist freezing, and/or enhance brushing properties and which increases the open time of the paint formulation, said N-alkyldialkanolamine being used to reduce the amount of the co-solvent required to achieve a predetermined open time.

5. Use according to any one of the claims 1 to 4 wherein said N-alkyldialkanolamine is selected from the group consisting of n-butyldiethanolamine, n-pentyldiethanolamine, n-hexyldiethanolamine, n-heptyldiethanolamine, n-octyldiethanolamine, n-butyldipropanolamine, n-pentyldipropanolamine, n-hexyldipropanolamine, n-heptyldipropanolamine and n-octyldipropanolamine.

**6.** Use according to claim 5 wherein said N-alkyldialkanolamine is n-butyldiethanolamine or n-octyldiethanolamine.

**7.** Use according to any one of the claims 1 to 6 wherein said N-alkyldialkanolamine is used in an amount of at least two, preferably in an amount of at least three and more preferably in an amount of at least four pounds per one hundred gallons of the formulation, the N-alkyldialkanolamine being in particular used in an amount of at the most ten pounds per one hundred gallons of the formulation.

**8.** Use according to any one of the claims 1 to 7 wherein the binder is a vinyl-acrylic resin.

**9.** Use according to any one of the claims 1 to 7 wherein the binder is a 100% acrylic resin.

**10.** Use according to any one of the claims 1 to 9 wherein said pigment is added in such an amount that the pigment volume concentration of the formulation is 10% to 70%

**11.** Use according to claim 10 wherein said pigment is added in such an amount that the pigment volume concentration of the formulation is 10% to 50%.

**Patentansprüche**

**1.** Verwendung von zumindest einem N-Alkyldialkanolamin der Formel

$$RN(CH_2CH_2OH)_2$$

oder

$$RN(CH_2CH(OH)CH_3)_2$$

wobei R eine Alkyl- oder Isoalkylgruppe mit 4 bis 8 Kohlenstoffatomen ist; wobei dieses N-Alkyldialkanolamin einen Dampfdruck bei 20 °C von weniger als 0.1 mmHg hat, bevorzugt weniger als 0.01 mmHg, und einen Kochpunkt bei 760 mmHg von mehr als 250 °C, als Neutralisationsmittel in einer Latexfarbrezeptur, hinzugefügt in einer solchen Menge, dass die Rezeptur einen pH-Wert von mindestens 8.5 hat, um deren Gehalt an flüchtigen organischen Verbindungen (VOC) zu senken, wobei die Farbrezeptur erhalten wird durch Mischen verschiedener Verbindungen, welche zumindest ein Bindemittel, zumindest ein Pigment, Wasser und zumindest ein Neutralisationsmittel einschließen, wobei eine VOC einen Dampfdruck von 0.1 mmHg oder mehr bei Raumtemperatur (RT) und einen Kochpunkt bei 760 mmHg von 250 °C oder weniger hat.

**2.** Verwendung nach Anspruch 1, wobei die Farbrezeptur weniger als 60 g/l VOC auf Grundlage des Gesamtvolumens der Farbe enthält.

**3.** Verwendung nach Anspruch 1, wobei die Farbrezeptur weniger als 75 g/l VOC enthält, bevorzugt weniger als 73 g/l und noch besser weniger als 70 g/l, auf Grundlage des Volumens der Farbrezeptur, von dem das Wasservolumen abgezogen wurde.

**4.** Verwendung nach irgendeinem der Ansprüche 1 bis 3, wobei die erwähnten Komponenten, die gemischt werden, um die Farbrezeptur herzustellen, ein Zusatzlösungsmittel umfassen, welches eine flüchtige organische Verbindung ist, um bei der Filmbildung zu unterstützen, um gegen Frieren beständig zu sein, und/oder um Streicheigenschaften zu verbessern, und welches die offene Zeit der Farbrezeptur erhöht, wobei das erwähnte N-Alkyldialkanolamin verwendet wird, um die Menge des Zusatzlösungsmittels zu senken, das notwendig ist, um eine vorgegebene offene Zeit zu erreichen.

**5.** Verwendung nach irgendeinem der Ansprüche 1 bis 4, wobei das erwähnte N-Alkyldialkanolamin ausgewählt wird aus der Gruppe bestehend aus n-Butyldiethanolamin, n-Pentyldiethanolamin, n-Hexyldiethanolamin, n-Heptyldiethanolamin, n-Octyldiethanolamin, n-Butyldipropanolamin, n-Pentyldipropanolamin, n-Hexyldipropanolamin, n-Heptyldipropanolamin und n-Octyldipropanolamin.

**6.** Verwendung nach Anspruch 5, wobei das erwähnte N-Alkyldialkanolamin n-Butyldiethanolamin oder n-Octyldiethanolamin ist.

7. Verwendung nach irgendeinem der Ansprüche 1 bis 6, wobei das erwähnte N-Alkyldialkanolamin in einer Menge von mindestens zwei, bevorzugt in einer Menge von mindestens drei und noch besser in einer Menge von mindestens vier Pfund pro einhundert Gallonen der Rezeptur verwendet wird, wobei das N-Alkyldialkanolamin insbesondere in einer Menge von höchstens zehn Pfund pro einhundert Gallonen der Rezeptur verwendet wird.

8. Verwendung nach irgendeinem der Ansprüche 1 bis 7, wobei das Bindemittel ein Vinyl-Acrylharz ist.

9. Verwendung nach irgendeinem der Ansprüche 1 bis 7, wobei das Bindemittel ein 100%iges Acrylharz ist.

10. Verwendung nach irgendeinem der Ansprüche 1 bis 9, wobei das erwähnte Pigment in einer solchen Menge hinzugefügt wird, dass die Pigment-Volumen-Konzentration der Rezeptur 10 % bis 70 % beträgt.

11. Verwendung nach Anspruch 10, wobei das erwähnte Pigment in einer solchen Menge hinzugefügt wird, dass die Pigment-Volumen-Konzentration der Rezeptur 10 % bis 50 % beträgt.


**Revendications**

1. Utilisation d'au moins une N-alkyldialkanolamine de formule

$$RN(CH_2CH_2OH)_2$$

ou

$$RN(CH_2CH(OH)CH_3)_2$$

dans laquelle R représente un groupe alkyle ou isoalkyle ayant 4 à 8 atomes de carbone ;
laquelle N-alkyldialkanolamine présente une pression de vapeur inférieure à 0.1 mm Hg, de préférence inférieure à 0.01 mm Hg, à 20°C et un point d'ébullition à 760 mm Hg supérieur à 250°C, comme agent neutralisant dans une formulation de peinture au latex ajoutée en une quantité telle que la formulation présente un pH d'au moins 8.5 pour réduire sa teneur en composés organiques volatils (COV), la formulation de peinture étant obtenue en mélangeant différents composants qui comprennent au moins un liant, au moins un pigment, de l'eau et au moins un agent neutralisant, dans lequel un COV présente une pression de vapeur de 0.1 mm Hg ou plus à température ambiante (TR) ainsi qu'un point d'ébullition à 760 mm Hg de 250°C ou moins.

2. Utilisation selon la revendication 1, dans laquelle la formulation de peinture contient moins de 60 g/l de COV par rapport au volume total de la peinture.

3. Utilisation selon la revendication 1, dans laquelle la formulation de peinture contient moins de 75 g/l de COV, de préférence moins de 73 g/l et plus préférablement moins de 70 g/l, sur la base du volume de la formulation de peinture dont le volume d'eau a été réduit.

4. Utilisation selon l'une quelconque des revendications 1 à 3, dans laquelle lesdits composants qui sont mélangés pour produire la formulation de peinture comprennent un co-solvant qui est un composé organique volatil pour aider à la formation de film, pour résister au gel et/ou améliorer les propriétés de brossage et qui augmente le temps d'ouverture de la formulation de peinture, ladite N-alkyldialkanolamine étant utilisée pour réduire la quantité de co-solvant nécessaire pour atteindre un temps d'ouverture prédéterminé.

5. Utilisation selon l'une quelconque des revendications 1 à 4
dans laquelle ladite N-alkyldialkanolamine est choisie dans le groupe constitué par la n-butyldiéthanolamine, la n-pentyldiéthanolamine, la n-hexyldiéthanolamine, la n-heptyldiéthanolamine, la n-octyldiéthanolamine, la n-butyldipropanolamine, la n-pentyldipropanolamine, la n-hexyldipropanolamine, la n-heptyldipropanolamine et la n-octyldipropanolamine.

6. Utilisation selon la revendication 5
dans laquelle ladite N-alkyldialkanolamine est la n-butyldiéthanolamine ou la n-octyldiéthanolamine.

7. Utilisation selon l'une quelconque des revendications 1 à 6

dans laquelle ladite N-alkyldialkanolamine est utilisée en une quantité d'au moins deux, de préférence en une quantité d'au moins trois et plus préférablement en une quantité d'au moins quatre livres pour cent gallons de la formulation, la N-alkyldialkanolamine étant en particulier utilisée en une quantité d'au plus dix livres pour cent gallons de la formulation.

8.  Utilisation selon l'une quelconque des revendications 1 à 7 dans laquelle le liant est une résine vinyl-acrylique.

9.  Utilisation selon l'une quelconque des revendications 1 à 7 dans laquelle le liant est une résine 100% acrylique.

10. Utilisation selon l'une quelconque des revendications 1 à 9, dans laquelle ledit pigment est ajouté en une quantité telle que la concentration en volume de pigment de la formulation est de 10 % à 70 %.

11. Utilisation selon la revendication 10 dans laquelle ledit pigment est ajouté en une quantité telle que la concentration en volume de pigment de la formulation est de 10 % à 50 %.

**Figure 1**

**Figure 2**

**EP 2 097 476 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1362897 A
- US 2541088 A

### Non-patent literature cited in the description

- **TOCHIGI, KATSUMI ; AKIMOTO, KENTAROU ; OCHI, KENJI ; LIU, FANGYHI ; KAWASE, YASUHITO.** *J.Chem.Eng.Data,* 1999, vol. 44 (3), 588-590
- **JEDLINSKI, Z. ; PAPROTNY, J.** *Rocz.Chem.,* 1966, vol. 40, 1487-1493
- **JOHNSON; DEGERING.** *J.Org.Chem.,* 1943, vol. 8, 11
- **NAESAENEN ; LINDELL.** *Finn. Chem. Lett.,* 1975, 38
- **DI GIORGIO ; SOMMER ; WHITMORE.** *J.Amer.Chem.Soc.,* 1949, vol. 71, 3255
- **ADKINS ; BILLICA.** *J.Amer.Chem.Soc.,* 1948, vol. 70, 3121
- **MATHIS et al.** *Bull. Soc. Chim. Fr.,* 1970, 3047-3055
- **MATTHES.** *Justus Liebigs Ann. Chem.,* 1901, vol. 315, 128
- **ISHIGURO et al.** *Yakugaku Zasshi,* 1954, vol. 74, 1162-1164
- *Chem.Abstr.,* 1955, 14767
- **FUJIKI.** *Collect. Scient. Pap. 5th Anniv. Shizuoka Coll. Pharm.,* 1958, 147
- *Chem.Abstr.,* 1959, 3050
- **SHIMANSKII et al.** *Sb. Tr. Ukr. Nauchn.,* 1960, vol. 6, 99
- *Chem.Abstr.,* 1963, vol. 58
- **YANG, QINZHENG ; LIN, JIMAO ; LI, FANGZHENG.** *Synth.Commun.,* 2001, 2817-2822
- **SZARVASI,E. et al.** *Eur. J. Med. Chem. Chim. Ther.,* 1976, vol. 11, 115-124
- **ZUNIGA, H. ; BARTULIN, J. ; RAMIREZ, A. ; MULLER, H. ; TAYLOR, T. R.** *Mol. Cryst. Liq. Cryst.,* 1990, vol. 185, 131-140
- **STONE, P. G. ; COHEN, S. G.** *J. Amer. Chem. Soc.,* 1982, vol. 104 (12), 3435-3440